# EUROPEAN PATENT APPLICATION

(11) **EP 4 793 086 A2**
(43) Date of publication of application: **19.08.2026**
(21) Application number: 26190348.8
(22) Date of filing: 09.12.2024
(51) Int. Cl.: B60L 53/14

(54) **PLUG-IN HYBRID ELECTRIC VEHICLE**

(30) Priority: 04.01.2024 JP 2024000342
(62) Document number(s) of the earlier application(s) in accordance with Art. 76 EPC: 24218278.0 / 4 582 279
(71) Applicant: Toyota Jidosha Kabushiki Kaisha, Toyota-shi, Aichi-ken 471-8571 (JP)
(72) Inventor: KAWASHIMA, Takahiro, Toyota-shi, Aichi-ken, 471-8571 (JP); HARADA, Taku, Toyota-shi, Aichi-ken, 471-8571 (JP); TOMITA, Makoto, Toyota-shi, Aichi-ken, 471-8571 (JP); SASAKI, Shoichi, Toyota-shi, Aichi-ken, 471-8571 (JP); OHTA, Chikashi, Toyota-shi, Aichi-ken, 471-8571 (JP)
(74) Representative: TBK

(57) **Abstract**

A minivan type plug-in hybrid electric vehicle (1) includes an engine (21), a motor (MG1, MG2), a fuel tank (52), a battery (50), an on-board charger (40), a power transmission mechanism (23, 24), an inverter (22) configured to drive the motor (MG1, MG2), an engine compartment (20), a floor panel (100), an exhaust pipe (54), a muffler (53), and one or more wire harnesses (81, 82, 83, 84, 85). The exhaust pipe (54) is disposed through a side of the battery (50) and the side of the fuel tank (52) to connect the engine (21) and the muffler (53), and the one or more wire harnesses (81, 82, 83, 84, 85) are routed in the vehicle front-rear direction through between the battery (50) and the exhaust pipe (54) and between the fuel tank (52) and the exhaust pipe (54).

## Description

### BACKGROUND OF THE INVENTION

### 1. Field of the Invention

The present disclosure relates to a plug-in hybrid electric vehicle that is connected to an external power source to charge its battery.

### 2. Description of Related Art

Japanese Unexamined Patent Application Publication No. 2021-160519 discloses a structure in which a battery, high-voltage system components, and exhaust system components are compactly disposed under a floor panel in a hybrid electric vehicle including an engine and a driving motor that are provided as a driving source.

### SUMMARY OF THE INVENTION

A minivan type vehicle including a slide seat slidable on a floor in the front-rear direction as a second row seat, and a slide door is known. For a sufficient sliding amount of the slide seat, long slide rails are required to be disposed on the floor. Thus, in minivan type vehicles, the floor rearward of a first row seat desirably has a low and flat structure.

A plug-in hybrid electric vehicle according to an aspect of the present disclosure is a minivan type plug-in hybrid electric vehicle having a vehicle cabin and a luggage space that are not separated from each other. The plug-in hybrid electric vehicle includes an engine as a first power source, a motor as a second power source, a fuel tank, a battery, an on-board charger, a power transmission mechanism, an inverter, an exhaust pipe, a muffler, an engine compartment, a floor panel, a first row seat, a second row seat, and one or more wire harnesses. The fuel tank is configured to store fuel to be supplied to the engine. The battery is configured to store electric power to be supplied to the motor. The on-board charger is configured to charge the battery with electric power from outside. The power transmission mechanism is configured to transmit rotational power of the engine and the motor to front wheels. The inverter is configured to drive the motor. The exhaust pipe is configured to guide exhaust from the engine to the rear of the vehicle. The muffler is configured to reduce an exhaust sound. The engine compartment is located forward of the vehicle cabin, and the engine, the motor, the power transmission mechanism, and the inverter are disposed inside the engine compartment. The floor panel constitutes a floor of the vehicle cabin, and the battery, the fuel tank, the exhaust pipe, and the muffler are disposed under the floor panel. The first row seat is disposed on the floor panel and located rearward of the front wheels in a vehicle side view. The second row seat is disposed on the floor panel and located rearward of the first row seat. The second row seat is located forward of rear wheels. The second row seat is configured to slide in the vehicle front-rear direction along a slide rail that is provided on the floor panel and extends in the vehicle front-rear direction. The one or more wire harnesses are configured to transmit electric power and routed in the vehicle front-rear direction through the side of the fuel tank under the floor panel.

The plug-in hybrid electric vehicle according to the aspect of the present disclosure may further include a rear wheel driving motor. The rear wheel driving motor may be configured to be driven by the inverter and disposed rearward of the fuel tank under the floor panel. The one or more wire harnesses may include a wire harness configured to connect the rear wheel driving motor and the inverter.

In the plug-in hybrid electric vehicle according to the aspect of the present disclosure, the fuel tank may be disposed rearward of the battery. The battery and the inverter may be connected through a wire harness that differs from the one or more wire harnesses.

In the plug-in hybrid electric vehicle according to the aspect of the present disclosure, the battery may be disposed across both an area on the vehicle right side and an area on the vehicle left side through the center in the vehicle-width direction. The battery may be disposed closer to one side in the vehicle-width direction such that a gravity center position of the battery is offset from the center in the vehicle-width direction. The one or more wire harnesses may be disposed closer to the side opposite in the vehicle-width direction to the side to which the battery is closer and disposed through the side of the battery.

The plug-in hybrid electric vehicle according to the aspect of the present disclosure may further include a rear wheel driving motor. The muffler may be located rearward of the rear wheel driving motor. The exhaust pipe may be disposed through the side of the battery and the side of the fuel tank to connect the engine and the muffler. The one or more wire harnesses may be routed in the vehicle front-rear direction through between the battery and the exhaust pipe and between the fuel tank and the exhaust pipe.

The plug-in hybrid electric vehicle according to the aspect of the present disclosure may further include a branch box, and a converter. The branch box may be configured to divide electric power supplied from the battery, and disposed under the first row seat and on or above the floor panel. The converter may be configured to convert the voltage of electric power supplied from the battery, and disposed rearward of an axle of the rear wheels and on or above the floor panel. The one or more wire harnesses may include a wire harness configured to connect the branch box and the converter.

In the plug-in hybrid electric vehicle according to the aspect of the present disclosure, the on-board charger may be disposed rearward of an axle of the rear wheels and on or above the floor panel. The one or more wire harnesses may include a wire harness configured to connect the battery and the on-board charger.

The plug-in hybrid electric vehicle according to the aspect of the present disclosure may further include a slide door located on the side of the vehicle, a charging port, and a branch box. The charging port may be configured to receive a charging plug inserted from outside of the vehicle, and disposed on a vehicle side face and rearward of the slide door. The branch box may be configured to divide electric power supplied from the battery. The one or more wire harnesses may include a wire harness configured to connect the charging port and the branch box.

The plug-in hybrid electric vehicle can achieve a low and flat floor to obtain a wide vehicle cabin space.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic diagram of a minivan type plug-in hybrid electric vehicle of an embodiment;
FIG. 2 is a plan view of a slide door included in the plug-in hybrid electric vehicle of the embodiment in a vehicle side view viewed from the left side;
FIG. 3 is a plan view of a slide door included in the plug-in hybrid electric vehicle of the embodiment in a vehicle side view viewed from the right side;
FIG. 4 is a schematic diagram showing an internal structure in the plug-in hybrid electric vehicle of the embodiment;
FIG. 5 is a schematic diagram showing the arrangement of seats in the plug-in hybrid electric vehicle of the embodiment;
FIG. 6 is a schematic diagram showing the arrangement of devices disposed on or above a floor panel in the plug-in hybrid electric vehicle of the embodiment;
FIG. 7 is a schematic diagram showing the arrangement of devices disposed under the floor panel in the plug-in hybrid electric vehicle of the embodiment;
FIG. 8 is a schematic diagram showing the configurations of a driving system and an electrical system in the plug-in hybrid electric vehicle of the embodiment; and
FIG. 9 is a schematic diagram showing the arrangement of devices disposed under a floor panel in a plug-in hybrid electric vehicle of a modification.

### DETAILED DESCRIPTION OF EMBODIMENTS

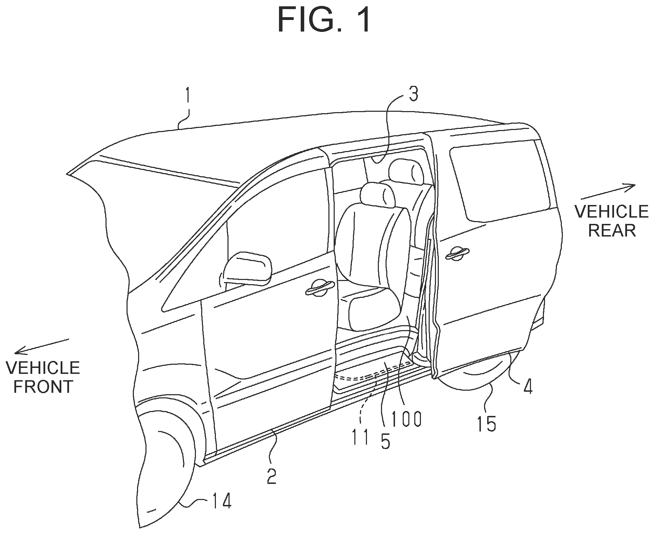

Hereinbelow, an embodiment of a plug-in hybrid electric vehicle will be described with reference to FIGS. 1 to 8.

### External Structure of Plug-in Hybrid Electric Vehicle 1

FIG. 1 is a schematic diagram showing the plug-in hybrid electric vehicle 1 of the present embodiment. As shown in FIG. 1, the plug-in hybrid electric vehicle 1 includes a front door 2, a vehicle opening 3, and a slide door 4 on a vehicle side face.

The vehicle opening 3 is opened and closed with the slide door 4 that moves in the vehicle front-rear direction. A step panel 5 is disposed at the bottom of the vehicle opening 3. The step panel 5 is disposed at the bottom of a floor panel 100 that constitutes a floor of the plug-in hybrid electric vehicle 1. A guide rail 11 extending in the vehicle front-rear direction of the plug-in hybrid electric vehicle 1 is fixed to a lower face of the step panel 5. A front end of the guide rail 11 is located rearward of front wheels 14. A rear end of the guide rail 11 is located forward of rear wheels 15.

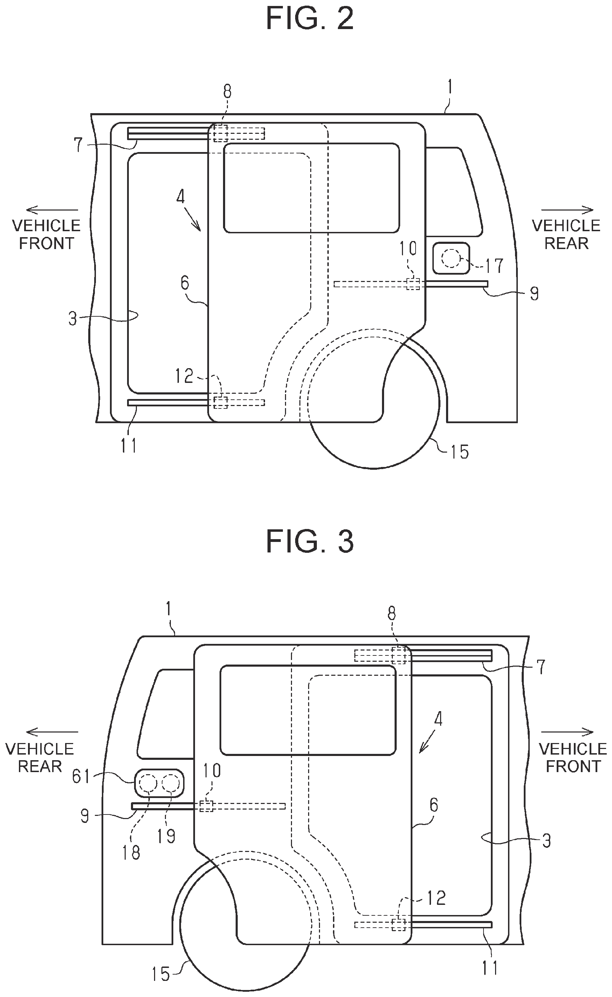

FIG. 2 is a plan view of the slide door 4 included in the plug-in hybrid electric vehicle 1 in a vehicle side view viewed from the left side. As shown in FIG. 2, the plug-in hybrid electric vehicle 1 includes an oil filler port 17 disposed on a vehicle left side face and rearward of the slide door 4. The plug-in hybrid electric vehicle 1 includes an upper rail 7, a center rail 9, and the guide rail 11 that are disposed around the vehicle opening 3. The upper rail 7 is disposed above the vehicle opening 3. The guide rail 11 is disposed below the vehicle opening 3. The center rail 9 is disposed on the vehicle side face rearward of the vehicle opening 3. The position of the center rail 9 in the vehicle-height direction is below the upper rail 7 and above the guide rail 11.

The slide door 4 includes a slide door body 6, an upper hinge unit 8, a center hinge unit 10, and a guide hinge unit 12. The upper hinge unit 8 and the guide hinge unit 12 are fixed near a front end of the slide door body 6 in the vehicle-length direction. The center hinge unit 10 is fixed near a rear end of the slide door body 6 in the vehicle-length direction.

The upper hinge unit 8 is fixed to an upper end portion of the slide door body 6. The guide hinge unit 12 is fixed to a lower end portion of the slide door body 6. The center hinge unit 10 is fixed to a central portion of the slide door body 6 in the height direction.

The upper hinge unit 8 is movably supported on the upper rail 7. The center hinge unit 10 is movably supported on the center rail 9. The guide hinge unit 12 is movably supported on the guide rail 11. Accordingly, the upper hinge unit 8, the center hinge unit 10, and the guide hinge unit 12 couple the slide door body 6 and the vehicle side face. The slide door body 6 can move relative to the vehicle side face by the upper hinge unit 8, the center hinge unit 10, and the guide hinge unit 12 moving along the upper rail 7, the center rail 9, and the guide rail 11. That is, the upper rail 7, the center rail 9, and the guide rail 11 define the moving direction of the slide door 4.

FIG. 3 is a plan view of a slide door 4 included in the plug-in hybrid electric vehicle 1 in a vehicle side view viewed from the right side. As shown in FIG. 3, the plug-in hybrid electric vehicle 1 includes a charging lid 61 disposed on a vehicle right side face and rearward of the slide door 4. Inside the charging lid 61, a first charging port 18 and a second charging port 19, which will be described further below, are disposed.

### Internal Structure of Plug-in Hybrid Electric Vehicle 1

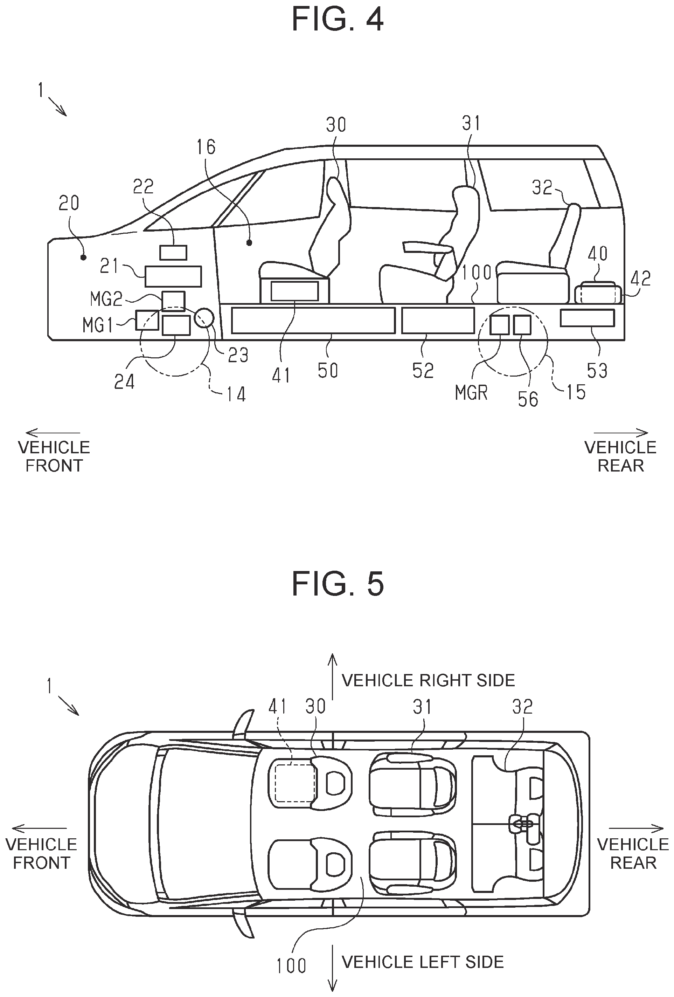

FIG. 4 schematically shows the internal structure of the plug-in hybrid electric vehicle 1 in a vehicle side view viewed from the left side. As shown in FIG. 4, the plug-in hybrid electric vehicle 1 is a minivan type vehicle having a vehicle cabin 16 and a luggage space that are not separated from each other. The plug-in hybrid electric vehicle 1 includes an engine compartment 20 located forward of the vehicle cabin 16. Inside the engine compartment 20, as a power source, an engine 21, a first motor generator MG1, a second motor generator MG2, a power control unit 22, a power split device 23, and a reduction mechanism 24 are disposed.

The floor panel 100 constitutes the floor of the plug-in hybrid electric vehicle 1. On the floor panel 100, a first row seat 30, a second row seat 31, and a third row seat 32 are disposed. The second row seat 31 is located rearward of the first row seat 30. In a vehicle side view, the first row seat 30 is located rearward of the front wheels 14. In a vehicle side view, the second row seat 31 is located forward of the rear wheels 15.

As shown in FIG. 4, the plug-in hybrid electric vehicle 1 includes a branch box 41 disposed below the first row seat 30 and above the floor panel 100. The branch box 41 is a high-voltage system component. Details of the branch box 41 will be described further below.

The plug-in hybrid electric vehicle 1 includes an on-board charger 40 and a DC-DC converter 42 that are disposed rearward of an axle of the rear wheels 15 and above the floor panel 100. Details of the on-board charger 40 and the DC-DC converter 42 will be described further below. The on-board charger 40 and the DC-DC converter 42 are high-voltage system components.

Under the floor panel 100 of the plug-in hybrid electric vehicle 1, a battery 50, a fuel tank 52, a muffler 53, a rear wheel driving motor generator MGR, and a rear wheel reduction mechanism 56 are disposed. The battery 50 stores electric power to be supplied to the first motor generator MG1, the second motor generator MG2, and the rear wheel driving motor generator MGR. The fuel tank 52 stores fuel to be supplied to the engine 21. The muffler 53 reduces an exhaust sound.

The fuel tank 52 is disposed rearward of the battery 50. The rear wheel driving motor generator MGR is disposed rearward of the fuel tank 52. The muffler 53 is disposed rearward of the rear wheel driving motor generator MGR.

FIG. 5 schematically shows the arrangement of the seats in a vehicle top view, looking down the plug-in hybrid electric vehicle 1 from above. As shown in FIG. 5, the first row seat 30 includes a driver's seat and a passenger seat. The second row seat 31 includes two independent seats. The third row seat 32 is located rearward of the second row seat 31.

### Devices Disposed on or above Floor Panel 100

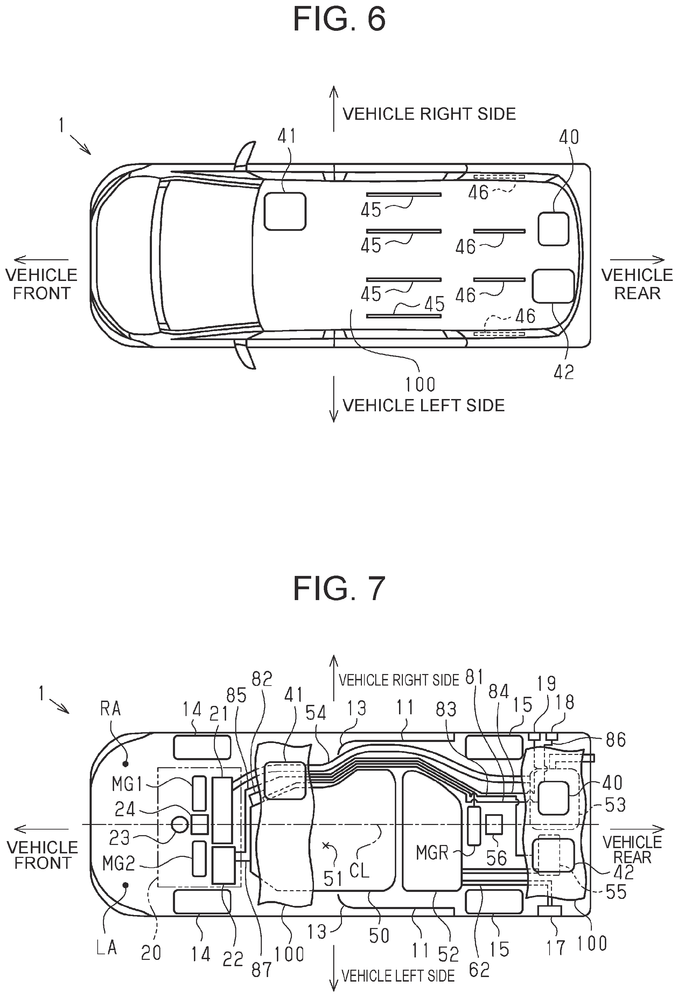

FIG. 6 is a schematic diagram in a vehicle top view, looking down the plug-in hybrid electric vehicle 1 from above as with FIG. 5. FIG. 6 schematically shows the arrangement of devices disposed on or above the floor panel 100. As shown in FIG. 6, the on-board charger 40, the branch box 41, and the DC-DC converter 42 are disposed on or above the floor panel 100.

First slide rails 45 extending in the vehicle front-rear direction are disposed rearward of the branch box 41. Second slide rails 46 extending in the vehicle front-rear direction are disposed rearward of the first slide rails 45. All four of the first slide rails 45 are disposed on the floor panel 100. Two of the second slide rails 46 located on the vehicle center are disposed on the floor panel 100. The remaining two side rails 46 are disposed on the vehicle side faces inside the vehicle cabin 16.

As shown in FIG. 5, the branch box 41 is disposed under the driver's seat. Accordingly, the height of the floor panel 100 in a portion located between the driver's seat and the passenger seat is equal to the height in a portion where the first slide rails 45 and the second slide rails 46 are disposed.

The second row seat 31 is disposed on the first slide rails 45. The second row seat 31 is slidable in the vehicle front-rear direction along the first slide rails 45. The third row seat 32 is disposed on the second slide rails 46. The third row seat 32 is slidable in the vehicle front-rear direction along the second slide rails 46.

### Devices Disposed Under Floor Panel 100

FIG. 7 is a schematic diagram in a vehicle top view, looking down the plug-in hybrid electric vehicle 1 from above as with FIG. 5. FIG. 7 schematically shows the arrangement of devices disposed under the floor panel 100. FIG. 7 also schematically shows the arrangement of the on-board charger 40, the branch box 41, and the DC-DC converter 42 disposed on or above the floor panel 100. In FIG. 7, the plug-in hybrid electric vehicle 1 is divided into an area RA on the vehicle right side and an area LA on the vehicle left side at a center line CL indicating the center of the plug-in hybrid electric vehicle 1 in the vehicle-width direction as a boundary.

The battery 50 is disposed across both the area RA on the vehicle right side and the area LA on the vehicle left side. The battery 50 is disposed closer to the vehicle left side. As a result, a gravity center position 51 of the battery 50 is located in the area LA on the vehicle left side. That is, the battery 50 is disposed closer to one side in the vehicle-width direction such that the gravity center position 51 of the battery 50 is offset from the center line CL.

The plug-in hybrid electric vehicle 1 includes the guide rail 11 for sliding the slide door 4 under the floor panel 100. The guide rail 11 is disposed overlapping a part of the battery 50 in the vehicle front-rear direction. The guide rail 11 has a curved portion 13 that is curved inward in the vehicle-width direction toward the front of the vehicle. When the slide door 4 is closed, the slide door 4 is pulled inward in the vehicle-width direction along the curved portion 13 of the guide rail 11.

The plug-in hybrid electric vehicle 1 includes an exhaust pipe 54 that is disposed under the floor panel 100 and guides exhaust from the engine 21 to the rear of the vehicle. The exhaust pipe 54 connects the engine 21 and the muffler 53. The exhaust pipe 54 is disposed closer to the vehicle right side and disposed in the area RA on the vehicle right side. That is, the exhaust pipe 54 is disposed closer to the side opposite to the side to which the battery 50 is closer in the vehicle-width direction. Furthermore, the exhaust pipe 54 is disposed through between the battery 50 and the guide rail 11. In addition, the exhaust pipe 54 is bent outward in the vehicle-width direction along the curved portion 13 of the guide rail 11.

The fuel tank 52 is disposed rearward of the battery 50. The fuel tank 52 is connected to the oil filler port 17 through an oil filler pipe 62.

A fuel vapor collecting device 55 is disposed rearward of the rear wheel driving motor generator MGR and sideward of the muffler 53 in the vehicle-width direction. The fuel vapor collecting device 55 is a canister that adsorbs fuel vapor gas generated inside the fuel tank 52.

The wire harness transmits electric power. The on-board charger 40 is connected to the battery 50 through a first wire harness 81. The first wire harness 81 is routed between the battery 50 and the exhaust pipe 54. The first wire harness 81 is routed in the vehicle front-rear direction through the side of the fuel tank 52.

The branch box 41 is connected to the battery 50 through a second wire harness 82. The second wire harness 82 is routed between the battery 50 and the exhaust pipe 54.

The DC-DC converter 42 is connected to the branch box 41 through a third wire harness 83. The third wire harness 83 is routed between the battery 50 and the exhaust pipe 54. The third wire harness 83 is routed in the vehicle front-rear direction through the side of the fuel tank 52.

The branch box 41 is connected to the second charging port 19 through a fourth wire harness 84. The fourth wire harness 84 is routed between the battery 50 and the exhaust pipe 54. The fourth wire harness 84 is routed in the vehicle front-rear direction through the side of the fuel tank 52.

The rear wheel driving motor generator MGR is connected to the power control unit 22 through a fifth wire harness 85. The fifth wire harness 85 is routed between the battery 50 and the exhaust pipe 54. The fifth wire harness 85 is routed in the vehicle front-rear direction through the side of the fuel tank 52.

The on-board charger 40 is connected to the first charging port 18 through a sixth wire harness 86.

The battery 50 is connected to the power control unit 22 through a seventh wire harness 87.

### Driving System of Plug-in Hybrid Electric Vehicle 1

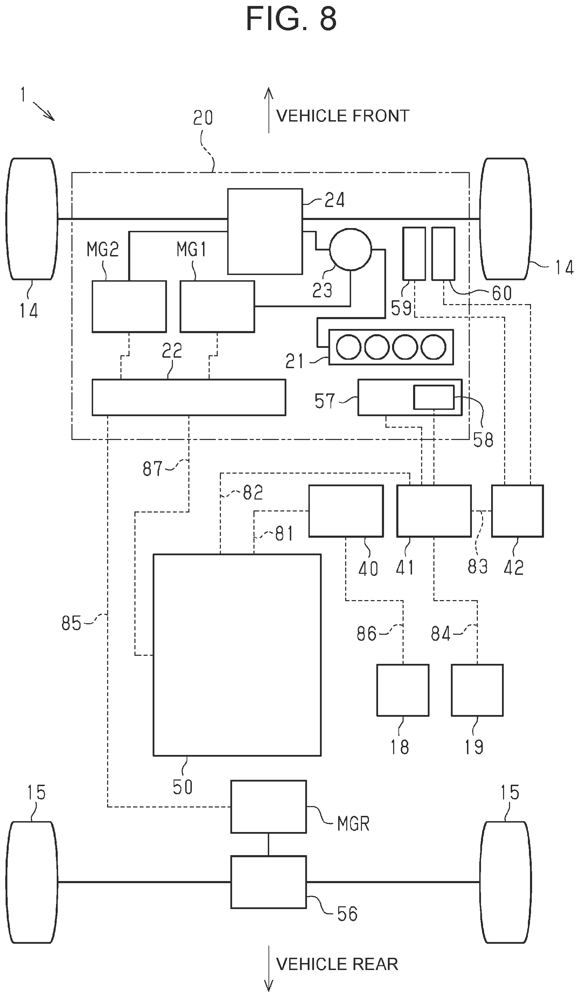

FIG. 8 schematically shows the configuration of a driving system and the configuration of an electrical system in the plug-in hybrid electric vehicle 1 of the embodiment.

As shown in FIG. 8, the second motor generator MG2 is connected to the battery 50 through the power control unit 22. The second motor generator MG2 is coupled to the front wheels 14 through the reduction mechanism 24. The rotational power of the second motor generator MG2 is transmitted to the front wheels 14 through the reduction mechanism 24 that is an example of a power transmission mechanism. That is, the second motor generator MG2 functions as a driving motor.

In addition, the engine 21 is coupled to the front wheels 14 through the power split device 23 and the reduction mechanism 24. The power split device 23 is an example of a power transmission mechanism as with the reduction mechanism 24. That is, the rotational power of the engine 21 is transmitted to the front wheels 14 through the power transmission mechanism. Note that the first motor generator MG1 is also coupled to the power split device 23. The first motor generator MG1 is, for example, a three-phase AC motor generator. The power split device 23 is a planetary gear mechanism. The power split device 23 can split the driving force between the engine 21, the first motor generator MG1, and the front wheels 14.

The first motor generator MG1 receives the driving force of the engine 21 and the driving force from the front wheels 14 to generate electric power. The first motor generator MG1 also serves as a starter that drives a crankshaft that is an output shaft of the engine 21 when the engine 21 is started. At this time, the first motor generator MG1 functions as an electric motor that generates a driving force in response to the supply of electric power from the battery 50. That is, the first motor generator MG1 functions as a driving motor.

The first motor generator MG1 and the second motor generator MG2 are connected to the battery 50 through the power control unit 22 and the seventh wire harness 87. AC electric power generated by the first motor generator MG1 is converted to DC electric power by the power control unit 22. Then, the battery 50 is charged with the DC electric power converted by the power control unit 22 through the seventh wire harness 87. That is, the power control unit 22 functions as an inverter.

In addition, DC electric power of the battery 50 is supplied to the power control unit 22 through the seventh wire harness 87. The supplied DC electric power is converted to AC electric power by the power control unit 22. The AC electric power converted by the power control unit 22 is supplied to the second motor generator MG2. When the plug-in hybrid electric vehicle 1 is decelerated, the second motor generator MG2 generates electric power using the driving force from the front wheels 14. Then, the battery 50 is charged with the generated electric power. That is, the plug-in hybrid electric vehicle 1 performs regenerative charging. At this time, the second motor generator MG2 functions as an electric generator. AC electric power generated by the second motor generator MG2 is converted to DC electric power by the power control unit 22. The battery 50 is charged with the DC electric power converted by the power control unit 22 through the seventh wire harness 87.

The rear wheel driving motor generator MGR is also connected to the battery 50 through the power control unit 22. The rear wheel driving motor generator MGR is coupled to the rear wheels 15 through the rear wheel reduction mechanism 56. DC electric power of the battery 50 is converted to AC electric power by the power control unit 22 and then supplied to the rear wheel driving motor generator MGR through the fifth wire harness 85. The rear wheel driving motor generator MGR is an electric motor that drives the rear wheels 15 using the electric power supplied from the battery 50. That is, the rear wheel driving motor generator MGR functions as a driving motor.

When the plug-in hybrid electric vehicle 1 is decelerated, the rear wheel driving motor generator MGR generates electric power using the driving force from the rear wheels 15. Then, the battery 50 is charged with the generated electric power. At this time, the rear wheel driving motor generator MGR functions as an electric generator. AC electric power generated by the rear wheel driving motor generator MGR is converted to DC electric power by the power control unit 22. Then, the battery 50 is charged with the DC electric power converted by the power control unit 22 through the fifth wire harness 85.

### Electrical System of Plug-in Hybrid Electric Vehicle 1

As shown in FIG. 8, the plug-in hybrid electric vehicle 1 includes the on-board charger 40, the branch box 41, and the DC-DC converter 42. The plug-in hybrid electric vehicle 1 also includes the first charging port 18 and the second charging port 19 as charging ports into which a charging plug is inserted from outside of the vehicle. The first charging port 18 is a charging port used for normal charging using an AC power source of, for example, 100 V or 200 V. The second charging port 19 is a charging port used for fast charging using a DC high-voltage power source of, for example, 50 kW.

As shown in FIG. 8, the on-board charger 40 is connected to the battery 50 through the first wire harness 81. The branch box 41 is connected to the battery 50 through the second wire harness 82. In addition, the DC-DC converter 42 is connected to the branch box 41 through the third wire harness 83.

The on-board charger 40 is connected to the first charging port 18 through the sixth wire harness 86. The on-board charger 40 converts AC electric power input into the on-board charger 40 from the AC power source connected to the first charging port 18 into DC electric power and outputs the DC electric power to charge the battery 50. That is, the plug-in hybrid electric vehicle 1 can use an AC power source as an external power source for charging the battery 50.

The branch box 41 has the function of dividing electric power of the battery 50 to multiple devices. For example, the battery 50 supplies DC electric power to the DC-DC converter 42, an air-conditioning device 57, and a water heater 58 through the branch box 41.

The air-conditioning device 57 is a device that performs air conditioning in the vehicle cabin 16 using the electric power supplied from the battery 50. The water heater 58 is a device that heats water to hot water using the electric power supplied from the battery 50 to use the hot water as a heat source for the air-conditioning device 57.

The branch box 41 is connected to the second charging port 19 through the fourth wire harness 84. A DC power source is connected to the second charging port 19. DC electric power input from the DC power source connected to the second charging port 19 is supplied to the battery 50 through the branch box 41. That is, the plug-in hybrid electric vehicle 1 can use a DC power source as an external power source for charging the battery 50.

The DC-DC converter 42 is a device that steps down the voltage of the battery 50 and supplies the stepped-down voltage to auxiliaries. Examples of the auxiliaries include an electric power steering 59 and an electric oil pump 60 that are disposed inside the engine compartment 20. The electric power steering 59 is a mechanism that assists a steering wheel operation of the driver. The electric oil pump 60 is a mechanism used for suctioning lubricating oil and using the suctioned lubricating oil to lubricate the engine 21.

### Actions of Embodiment

When the wire harness is routed above the fuel tank 52, it is necessary to install the floor panel 100 at a position higher than the wire harness in order to make the floor of the plug-in hybrid electric vehicle 1 flat. When the wire harness is routed through the side of the fuel tank 52 as in the above configuration, the position of the floor panel 100 can be made lower than that when the wire harness is routed above the fuel tank 52. Lowering the position of the floor panel 100 widens the vehicle cabin space in the height direction.

### Effects of Embodiment

(1) The plug-in hybrid electric vehicle 1 can achieve a low and flat floor to obtain a wide vehicle cabin space.
(2) The plug-in hybrid electric vehicle 1 includes the rear wheel driving motor generator MGR. The rear wheel driving motor generator MGR is driven by the power control unit 22. Under the floor panel 100, the rear wheel driving motor generator MGR is disposed rearward of the fuel tank 52. The wire harness that transmits electric power includes the fifth wire harness 85 that connects the rear wheel driving motor generator MGR and the power control unit 22. When the fifth wire harness 85 is routed through the side of the fuel tank 52 as in the above configuration, the position of the floor panel 100 in the vehicle cabin space can be made lower than that when the fifth wire harness 85 is routed above the fuel tank 52. Lowering the position of the floor panel 100 widens the vehicle cabin space in the vehicle-height direction. Thus, even when the plug-in hybrid electric vehicle 1 includes the rear wheel driving motor generator MGR, it is possible to achieve a low and flat floor to obtain a wide vehicle cabin space.
(3) In the plug-in hybrid electric vehicle 1, the fuel tank 52 is disposed rearward of the battery 50. The battery 50 and the power control unit 22 are connected through the seventh wire harness 87. When the battery 50 is disposed forward of the fuel tank 52 as in the above configuration, the distance between the power control unit 22 inside the engine compartment 20 and the battery 50 is reduced. This reduces the length of the seventh wire harness 87 required to connect the battery 50 and the power control unit 22. The shorter the seventh wire harness 87 is, the more a power loss in the seventh wire harness 87 can be reduced. Thus, the plug-in hybrid electric vehicle 1 can reduce the power loss in the seventh wire harness 87 routed between the battery 50 and the power control unit 22.
(4) In the plug-in hybrid electric vehicle 1, the battery 50 is disposed across both the area RA on the vehicle right side and the area LA on the vehicle left side through the center in the vehicle-width direction. Furthermore, the battery 50 is disposed closer to one side in the vehicle-width direction such that the gravity center position 51 of the battery 50 is offset from the center in the vehicle-width direction. The wire harness routed in the vehicle front-rear direction through the side of the fuel tank 52 is disposed closer to the side opposite to the side to which the battery 50 is closer in the vehicle-width direction. The wire harness routed in the vehicle front-rear direction through the side of the fuel tank 52 is disposed through the side of the battery 50. When the wire harness is disposed under the floor panel 100 through above or below the battery 50, a low floor cannot be achieved, or a flat floor cannot be achieved. Thus, a wide vehicle cabin cannot be obtained. It is conceivable that the battery 50 may be split and disposed on the sides of the wire harnesses such that the wire harnesses passes through the center of the vehicle. However, in this case, multiple small batteries need to be installed. According to the above configuration, a space for installing the wire harness can be provided on the side of the battery 50 and under the floor panel 100. By disposing the wire harnesses on the side of the battery 50, a flat floor can be provided without raising the position of the floor panel 100. Thus, the plug-in hybrid electric vehicle 1 can be equipped with the large battery 50 while achieving a low and flat floor to obtain a wide vehicle cabin space.
(5) In the plug-in hybrid electric vehicle 1, the muffler 53 is disposed rearward of the rear wheel driving motor generator MGR. The exhaust pipe 54 is disposed through the side of the battery 50 and the side of the fuel tank 52 to connect the engine 21 and the muffler 53. The wire harness routed in the plug-in hybrid electric vehicle 1 includes the wire harness that is routed in the vehicle front-rear direction through between the battery 50 and the exhaust pipe 54 and between the fuel tank 52 and the exhaust pipe 54. When the wire harness is routed between the battery 50 and the exhaust pipe 54 as in the above configuration, impact from the side of the vehicle is absorbed by the exhaust pipe 54 before reaching the wire harness. Thus, the plug-in hybrid electric vehicle 1 can protect the wire harness from impact from the side of the vehicle.
(6) The plug-in hybrid electric vehicle 1 includes the branch box 41 that divides electric power supplied from the battery 50, and the DC-DC converter 42 that converts the voltage of electric power supplied from the battery 50. The branch box 41 is disposed under the first row seat 30 and on or above the floor panel 100. The DC-DC converter 42 is disposed rearward of the axle of the rear wheels 15 and on or above the floor panel 100. The wire harness routed in the plug-in hybrid electric vehicle 1 includes the third wire harness 83 that connects the branch box 41 and the DC-DC converter 42. A high voltage may be applied to the third wire harness 83 that connects the branch box 41 and the DC-DC converter 42. Thus, a structure that protects the third wire harness 83 from impact from the outside of the vehicle is preferably adopted. When the third wire harness 83 is routed between the battery 50 and the exhaust pipe 54, impact from the side of the vehicle is absorbed by the exhaust pipe 54 before reaching the third wire harness 83. That is, the third wire harness 83 is protected from impact from the side of the vehicle. Thus, the plug-in hybrid electric vehicle 1 can protect the third wire harness 83 that connects the branch box 41 and the DC-DC converter 42 from impact from the side of the vehicle.
(7) In the plug-in hybrid electric vehicle 1, the on-board charger 40 is disposed rearward of the axle of the rear wheels 15 and on or above the floor panel 100. The wire harness routed in the plug-in hybrid electric vehicle 1 includes the first wire harness 81 that connects the battery 50 and the on-board charger 40. A high voltage may be applied to the first wire harness 81 that connects the battery 50 and the on-board charger 40. Thus, a structure that protects the first wire harness 81 from impact from the outside of the vehicle is preferably adopted. When the first wire harness 81 is routed between the battery 50 and the exhaust pipe 54, impact from the side of the vehicle is absorbed by the exhaust pipe 54 before reaching the first wire harness 81. That is, the first wire harness 81 is protected from impact from the side of the vehicle. Thus, the plug-in hybrid electric vehicle 1 can protect the first wire harness 81 that connects the battery 50 and the on-board charger 40 from impact from the side of the vehicle.
(8) The plug-in hybrid electric vehicle 1 includes the second charging port 19 into which a charging plug is inserted from the outside of the vehicle. The second charging port 19 is disposed on the vehicle side face and rearward of the slide door 4. The wire harness routed in the plug-in hybrid electric vehicle 1 includes the fourth wire harness 84 that connects the second charging port 19 and the branch box 41. A high voltage may be applied to the fourth wire harness 84 that connects the second charging port 19 and the branch box 41. Thus, a structure that protects the fourth wire harness 84 from impact from the outside of the vehicle is preferably adopted. When the fourth wire harness 84 is routed between the battery 50 and the exhaust pipe 54, impact from the side of the vehicle is absorbed by the exhaust pipe 54 before reaching the fourth wire harness 84. That is, the fourth wire harness 84 is protected from impact from the side of the vehicle. Thus, the plug-in hybrid electric vehicle 1 can protect the fourth wire harness 84 that connects the second charging port 19 and the branch box 41 from impact from the side of the vehicle.

### Modifications

The present embodiment can be modified as described below to be implemented. The present embodiment and the following modifications can be implemented in combination with each other without any technical inconsistency.

The plug-in hybrid electric vehicle 1 may control the driving motor inside the engine compartment 20 and the rear wheel driving motor generator MGR using different power control units.

The plug-in hybrid electric vehicle 1 may further include a power control unit outside the engine compartment 20, in addition to the power control unit 22 inside the engine compartment 20.

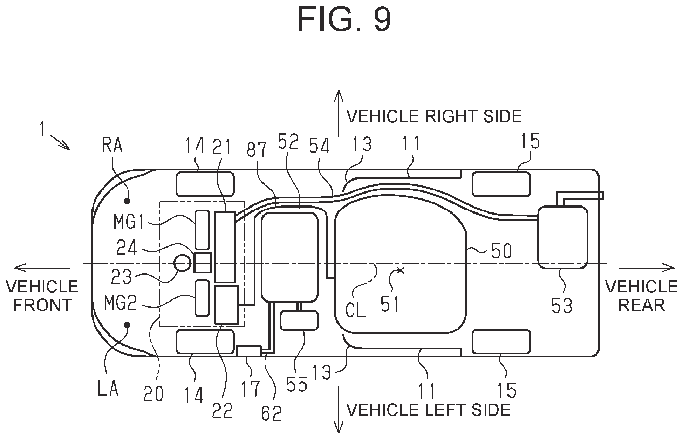

In the plug-in hybrid electric vehicle 1, the fuel tank 52 may be disposed forward of the battery 50, as long as the wire harness is routed in the vehicle front-rear direction through the side of the fuel tank 52. FIG. 9 is a schematic diagram showing the arrangement of devices disposed under the floor panel 100 in the plug-in hybrid electric vehicle 1. As shown in FIG. 9, the seventh wire harness 87 that connects the power control unit 22 and the battery 50 is routed in the vehicle front-rear direction through the side of the fuel tank 52. Furthermore, the fuel tank 52 is disposed forward of the battery 50.

In the plug-in hybrid electric vehicle 1, no wire harness may be routed between the battery 50 and the exhaust pipe 54, as long as a wire harness is routed in the vehicle front-rear direction through the side of the fuel tank 52. As shown in FIG. 9, the seventh wire harness 87 that connects the power control unit 22 and the battery 50 is routed in the vehicle front-rear direction through the side of the fuel tank 52. Furthermore, no wire harness is routed between the battery 50 and the exhaust pipe 54.

In the plug-in hybrid electric vehicle 1, the first wire harness 81 may not be routed between the battery 50 and the exhaust pipe 54, as long as a wire harness is routed in the vehicle front-rear direction through the side of the fuel tank 52. As shown in FIG. 9, the seventh wire harness 87 that connects the power control unit 22 and the battery 50 is routed in the vehicle front-rear direction through the side of the fuel tank 52. In this case, the first wire harness 81 that connects the battery 50 and the on-board charger 40 may not be routed between the battery 50 and the exhaust pipe 54.

In the plug-in hybrid electric vehicle 1, the third wire harness 83 may not be routed between the battery 50 and the exhaust pipe 54, as long as a wire harness is routed in the vehicle front-rear direction through the side of the fuel tank 52. As shown in FIG. 9, the seventh wire harness 87 that connects the power control unit 22 and the battery 50 is routed in the vehicle front-rear direction through the side of the fuel tank 52. In this case, the third wire harness 83 that connects the branch box 41 and the DC-DC converter 42 may not be routed between the battery 50 and the exhaust pipe 54.

In the plug-in hybrid electric vehicle 1, the fourth wire harness 84 may not be routed between the battery 50 and the exhaust pipe 54, as long as a wire harness is routed in the vehicle front-rear direction through the side of the fuel tank 52. As shown in FIG. 9, the seventh wire harness 87 that connects the power control unit 22 and the battery 50 is routed in the vehicle front-rear direction through the side of the fuel tank 52. In this case, the fourth wire harness 84 that connects the second charging port 19 and the branch box 41 may not be routed between the battery 50 and the exhaust pipe 54.

The plug-in hybrid electric vehicle 1 may not include the fifth wire harness 85 and the rear wheel driving motor generator MGR, as long as a wire harness is routed in the vehicle front-rear direction through the side of the fuel tank 52. As shown in FIG. 9, the seventh wire harness 87 that connects the power control unit 22 and the battery 50 is routed in the vehicle front-rear direction through the side of the fuel tank 52. In this case, the plug-in hybrid electric vehicle 1 may not include the fifth wire harness 85 and the rear wheel driving motor generator MGR.

The plug-in hybrid electric vehicle 1 may not include the slide door 4, the upper rail 7, the center rail 9, and the guide rail 11.
The plug-in hybrid electric vehicle 1 may include the slide door 4, the upper rail 7, the center rail 9, and the guide rail 11 only on one side of the vehicle.

In the plug-in hybrid electric vehicle 1, the first charging port 18 may be disposed in a place other than the place on the vehicle side face and rearward of the slide door 4.
In the plug-in hybrid electric vehicle 1, the second charging port 19 may be disposed in a place other than the place on the vehicle side face and rearward of the slide door 4.

The plug-in hybrid electric vehicle 1 may not include the first charging port 18. That is, the plug-in hybrid electric vehicle 1 may include only the second charging port 19 as the charging port into which the charging plug is inserted.

The plug-in hybrid electric vehicle 1 may not include the second charging port 19. That is, the plug-in hybrid electric vehicle 1 may include only the first charging port 18 as the charging port into which the charging plug is inserted.

The plug-in hybrid electric vehicle 1 may not include the branch box 41. For example, when the battery 50 has the function of dividing current, the plug-in hybrid electric vehicle 1 may not include the branch box 41.

In the plug-in hybrid electric vehicle 1, the branch box 41 may be disposed at a position other than the position under the right side seat in the first row seat 30. For example, the branch box 41 may be disposed under the left side seat in the first row seat 30. For example, the branch box 41 may be disposed between the right side seat and the left side seat in the first row seat 30.

The plug-in hybrid electric vehicle 1 may be an autonomous driving vehicle. In this case, the plug-in hybrid electric vehicle 1 may not include the driver's seat. In this case, the plug-in hybrid electric vehicle 1 includes a right side seat and a left side seat as the first row seat 30. The branch box 41 is disposed under the right side seat. In the plug-in hybrid electric vehicle 1, the branch box 41 may be disposed at a position other than the position under the right side seat. For example, the branch box 41 may be disposed under the left side seat. For example, the branch box 41 may be disposed between the right side seat and the left side seat.

In the plug-in hybrid electric vehicle 1, the battery 50 may not be disposed across both the area RA on the vehicle right side and the area LA on the vehicle left side through the center in the vehicle-width direction, as long as the wire harness is routed in the vehicle front-rear direction through the side of the fuel tank 52.

In the plug-in hybrid electric vehicle 1, the battery 50 may not be disposed closer to one side in the vehicle-width direction such that the gravity center position 51 of the battery 50 is offset from the center in the vehicle-width direction, as long as the wire harness is routed in the vehicle front-rear direction through the side of the fuel tank 52.

In the plug-in hybrid electric vehicle 1, the wire harness may not be routed closer to the side opposite to the side to which the battery 50 is closer in the vehicle-width direction, as long as the wire harness is routed in the vehicle front-rear direction through the side of the fuel tank 52.
This application is a divisional application of European patent application no. 24218278.0 (the "parent application"), also published as EP 4582279. Based on the original claims of the parent application, the following aspects are repeated below in the present specification and from part of the content of this divisional application as filed.
Aspect 1. A plug-in hybrid electric vehicle (1) of a minivan type having a vehicle cabin and a luggage space that are not separated from each other, the plug-in hybrid electric vehicle (1) comprising:
   an engine (21) as a first power source;
   a motor (MG1, MG2) as a second power source;
   a fuel tank (52) configured to store fuel to be supplied to the engine (21);
   a battery (50) configured to store electric power to be supplied to the motor (MG1, MG2);
   an on-board charger (40) configured to charge the battery (50) with electric power from outside;
   a power transmission mechanism (23, 24) configured to transmit rotational power of the engine (21) and the motor (MG1, MG2) to front wheels;
   an inverter (22) configured to drive the motor (MG1, MG2);
   an exhaust pipe (54) configured to guide exhaust from the engine (21) to rear of the vehicle;
   a muffler (53) configured to reduce an exhaust sound;
   an engine compartment (20) located forward of the vehicle cabin and inside which the engine (21), the motor (MG1, MG2), the power transmission mechanism (23, 24), and the inverter (22) are disposed;
   a floor panel (100) constituting a floor of the vehicle cabin and under which the battery (50), the fuel tank (52), the exhaust pipe (54), and the muffler (53) are disposed;
   a first row seat (30) disposed on the floor panel (100) and located rearward of the front wheels in a vehicle side view;
   a second row seat (31) disposed on the floor panel (100) and located rearward of the first row seat (30), the second row seat (31) being located forward of rear wheels, the second row seat (31) being configured to slide in a vehicle front-rear direction along a slide rail that is provided on the floor panel (100) and extends in the vehicle front-rear direction; and
   one or more wire harnesses (81, 82, 83, 84, 85) configured to transmit electric power and routed in the vehicle front-rear direction through a side of the fuel tank (52) under the floor panel (100).
Aspect 2. The plug-in hybrid electric vehicle (1) according to Aspect 1, further comprising a rear wheel driving motor (MGR) configured to be driven by the inverter (22) and disposed rearward of the fuel tank (52) under the floor panel (100), wherein the one or more wire harnesses (81, 82, 83, 84, 85) include a wire harness (85) configured to connect the rear wheel driving motor (MGR) and the inverter (22).
Aspect 3. The plug-in hybrid electric vehicle (1) according to Aspect 1, wherein
   the fuel tank (52) is disposed rearward of the battery (50), and
   the battery (50) and the inverter (22) are connected through a wire harness (87) that differs from the one or more wire harnesses (81, 82, 83, 84, 85).
Aspect 4. The plug-in hybrid electric vehicle (1) according to Aspect 1, wherein
   the battery (50) is disposed across both an area on a vehicle right side and an area on a vehicle left side through a center in a vehicle-width direction,
   the battery (50) is disposed closer to one side in the vehicle-width direction such that a gravity center position of the battery (50) is offset from the center in the vehicle-width direction, and
   the one or more wire harnesses (81, 82, 83, 84, 85) are disposed closer to a side opposite in the vehicle-width direction to the side to which the battery (50) is closer and disposed through a side of the battery (50).
Aspect 5. The plug-in hybrid electric vehicle (1) according to Aspect 4, further comprising a rear wheel driving motor (MGR), wherein
   the muffler (53) is located rearward of the rear wheel driving motor (MGR),
   the exhaust pipe (54) is disposed through the side of the battery (50) and the side of the fuel tank (52) to connect the engine (21) and the muffler (53), and
   the one or more wire harnesses (81, 82, 83, 84, 85) are routed in the vehicle front-rear direction through between the battery (50) and the exhaust pipe (54) and between the fuel tank (52) and the exhaust pipe (54).
Aspect 6. The plug-in hybrid electric vehicle (1) according to Aspect 5, further comprising:
   a branch box (41) configured to divide electric power supplied from the battery (50), and disposed under the first row seat (30) and on or above the floor panel (100); and
   a converter (42) configured to convert a voltage of electric power supplied from the battery (50), and disposed rearward of an axle of the rear wheels and on or above the floor panel (100), wherein
   the one or more wire harnesses (81, 82, 83, 84, 85) include a wire harness (83) configured to connect the branch box (41) and the converter (42).
Aspect 7. The plug-in hybrid electric vehicle (1) according to Aspect 5, wherein
   the on-board charger (40) is disposed rearward of an axle of the rear wheels and on or above the floor panel (100), and
   the one or more wire harnesses (81, 82, 83, 84, 85) include a wire harness (81) configured to connect the battery (50) and the on-board charger (40).
Aspect 8. The plug-in hybrid electric vehicle (1) according to Aspect 5, further comprising:
   a slide door (4) located on a side of the vehicle;
   a charging port (18, 19) configured to receive a charging plug inserted from outside of the vehicle, and disposed on a vehicle side face and rearward of the slide door (4); and
   a branch box (41) configured to divide electric power supplied from the battery (50), wherein
   the one or more wire harnesses (81, 82, 83, 84, 85) include a wire harness (84) configured to connect the charging port (18, 19) and the branch box (41).

## Claims

1. A plug-in hybrid electric vehicle (1) of a type having a vehicle cabin and a luggage space that are not separated from each other, the plug-in hybrid electric vehicle (1) comprising:
an engine (21) as a first power source;
a motor (MG1) as a second power source;
a fuel tank (52) configured to store fuel to be supplied to the engine (21);
a battery (50) configured to store electric power to be supplied to the motor (MG1);
an on-board charger (40) configured to charge the battery (50) with electric power from outside;
a power transmission mechanism (23, 24) configured to transmit rotational power of the engine (21) and the motor (MG1) to front wheels;
an inverter (22) configured to drive the motor (MG1);
an exhaust pipe (54) configured to guide exhaust from the engine (21) to rear of the vehicle;
a muffler (53) configured to reduce an exhaust sound;
an engine compartment (20) located forward of the vehicle cabin and inside which the engine (21), the motor (MG1), the power transmission mechanism (23, 24), and the inverter (22) are disposed;
a floor panel (100) constituting a floor of the vehicle cabin and under which the battery (50), the fuel tank (52), the exhaust pipe (54), and the muffler (53) are disposed;
and
one or more wire harnesses (81, 82, 83, 84, 85) configured to transmit electric power and routed in the vehicle front-rear direction through a side of the fuel tank (52) under the floor panel (100), wherein
the battery (50) is disposed across both an area on a vehicle right side and an area on a vehicle left side through a center in a vehicle-width direction,
**characterized in that**
the plug-in hybrid electric vehicle (1) is of a minivan type,
the plug-in hybrid electric vehicle (1) further comprises:
a first row seat (30) disposed on the floor panel (100) and located rearward of the front wheels in a vehicle side view; and
a second row seat (31) disposed on the floor panel (100) and located rearward of the first row seat (30), the second row seat (31) being located forward of rear wheels, the second row seat (31) being configured to slide in a vehicle front-rear direction along a slide rail that is provided on the floor panel (100) and extends in the vehicle front-rear direction,
the exhaust pipe (54) is disposed through a side of the battery (50) and the side of the fuel tank (52) to connect the engine (21) and the muffler (53), and
the one or more wire harnesses (81, 82, 83, 84, 85) are routed in the vehicle front-rear direction through between the battery (50) and the exhaust pipe (54) and between the fuel tank (52) and the exhaust pipe (54).

2. The plug-in hybrid electric vehicle (1) according to claim 1, further comprising a rear wheel driving motor (MGR) configured to be driven by the inverter (22) and disposed rearward of the fuel tank (52) under the floor panel (100), wherein the one or more wire harnesses (81, 82, 83, 84, 85) include a wire harness (85) configured to connect the rear wheel driving motor (MGR) and the inverter (22).

3. The plug-in hybrid electric vehicle (1) according to claim 1, wherein
the fuel tank (52) is disposed rearward of the battery (50), and
the battery (50) and the inverter (22) are connected through a wire harness (87) that differs from the one or more wire harnesses (81, 82, 83, 84, 85).

4. The plug-in hybrid electric vehicle (1) according to claim 1, wherein
the battery (50) is disposed closer to one side in the vehicle-width direction such that a gravity center position of the battery (50) is offset from the center in the vehicle-width direction, and
the one or more wire harnesses (81, 82, 83, 84, 85) are disposed closer to a side opposite in the vehicle-width direction to the side to which the battery (50) is closer and disposed through the side of the battery (50).

5. The plug-in hybrid electric vehicle (1) according to claim 4, further comprising a rear wheel driving motor (MGR), wherein
the muffler (53) is located rearward of the rear wheel driving motor (MGR).

6. The plug-in hybrid electric vehicle (1) according to claim 5, further comprising:
a branch box (41) configured to divide electric power supplied from the battery (50), and disposed under the first row seat (30) and on or above the floor panel (100); and
a converter (42) configured to convert a voltage of electric power supplied from the battery (50), and disposed rearward of an axle of the rear wheels and on or above the floor panel (100), wherein
the one or more wire harnesses (81, 82, 83, 84, 85) include a wire harness (83) configured to connect the branch box (41) and the converter (42).

7. The plug-in hybrid electric vehicle (1) according to claim 5, wherein
the on-board charger (40) is disposed rearward of an axle of the rear wheels and on or above the floor panel (100), and
the one or more wire harnesses (81, 82, 83, 84, 85) include a wire harness (81) configured to connect the battery (50) and the on-board charger (40).

8. The plug-in hybrid electric vehicle (1) according to claim 5, further comprising:
a slide door (4) located on a side of the vehicle;
a charging port (18, 19) configured to receive a charging plug inserted from outside of the vehicle, and disposed on a vehicle side face and rearward of the slide door (4); and
a branch box (41) configured to divide electric power supplied from the battery (50),
wherein
the one or more wire harnesses (81, 82, 83, 84, 85) include a wire harness (84) configured to connect the charging port (18, 19) and the branch box (41).
